Europäisches Patentamt

European Patent Office

Office européen des brevets

(11) Veröffentlichungsnummer: **0 278 061**
**A2**

(12) **EUROPÄISCHE PATENTANMELDUNG**

(21) Anmeldenummer: 87115797.0

(22) Anmeldetag: 28.10.87

(51) Int. Cl.4: **C01B 31/14**

(30) Priorität: 11.02.87 DE 3704131

(43) Veröffentlichungstag der Anmeldung:
17.08.88 Patentblatt 88/33

(84) Benannte Vertragsstaaten:
**BE DE FR GB IT NL**

(71) Anmelder: **Degussa Aktiengesellschaft**
**Weissfrauenstrasse 9**
**D-6000 Frankfurt am Main 1(DE)**

(72) Erfinder: **Karl, Alfons, Dr.**
**Herzbergstrasse 59**
**D-6466 Gründau 1(DE)**
Erfinder: **Walter, Erwin**
**Karlstrasse 33**
**D-6460 Geinhausen(DE)**
Erfinder: **Kühner, Gerhard, Dr.**
**Liesingstrasse 1**
**D-6450 Hanau 9(DE)**
Erfinder: **Von Kienle, Hartmut, Dr.**
**Am Hirschgraben 21**
**D-6056 Heusenstamm 2(DE)**

(54) Aktivkohlegranulate sowie Verfahren zu ihrer Herstellung.

(57) Die Aktivkohlegranulate enthalten Aktivkohle, Kieselsäure und gegebenenfalls Wasser.
Sie werden hergestellt, indem man in beliebiger Reihenfolge die einzelnen Komponenten mischt, homogenisiert, die so erhaltene Mischung zu Strängen verpreßt und trocknet.

EP 0 278 061 A2

## Aktivkohlegranulate sowie Verfahren zu ihrer Herstellung

Die Erfindung betrifft Aktivkohlegranulate sowie das Verfahren zu ihrer Herstellung.

Es ist bekannt, Aktivkohlegranulate, die bei der Benutzung spontan mit Wasser zerfallen, herzustellen, indem man pulverförmige Aktivkohle, Kieselsol, Wasser und gegebenenfalls Hilfsstoffe, wie Gelatine, miteinander vermischt, anschließend granuliert und trocknet (DE-OS 30 15 439).

Die derart hergestellten Aktivkohlegranulate haben den Nachteil, daß sie als Bindemittel Kieselsol enthalten. Kieselsol steht nur als wässrige Lösung zur Verfügung. Es ist nur begrenzt lagerfähig und empfindlich gegen äußere Temperatureinflüsse. Ein wasserfreies Granulat mit guten anwendungstechnischen Eigenschaften kann nach bekannten Verfahren nur durch vorsichtiges Trocknen hergestellt werden. Zur Erzielung besonders guter Härten müssen die bekannten Granulate Hilfsmittel wie Gelatine enthalten. Die Verwendung der wäßrigen Kieselsollösung hat weiterhin den Nachteil, daß eine große Wassermenge in die Mischung eingebracht wird.

Weiterhin ist es bekannt, zur Schönung von alkoholischen Getränken und Fruchtsäften Aktivkohlegranulate einzusetzen, die durch Granulieren von feingemahlener Aktivkohle in Gegenwart von Bentonit und Wasser hergestellt wurden (vgl. DE-PS 15 67 491). Diese bekannten Granulate haben den Nachteil, daß zur Erzielung ausreichender Abriebhärten beträchtliche Mengen an Bentonit erforderlich sind. Zur Herstellung besonders fester Granulate müssen Hilfsmittel, wie z. B. Methylcellulose zugesetzt werden. Von besonderem Nachteil ist der hohe Anteil an Bentonit, das aufgrund seiner hohen Quellfähigkeit, seines hohen Adsorptions-und Ionenaustauschvermögens unerwünschte Nebenreaktionen verursachen kann.

Gegenstand der Erfindung sind Aktivkohlegranulate, enthaltend pulverförmige Aktivkohle, Kieselsäure und gegebenenfalls Wasser.

Ein weiterer Gegenstand der Erfindung ist ein Verfahren zur Herstellung der Aktivkohlegranulate, welches dadurch gekennzeichnet ist, daß man pulverförmige Aktivkohle, Wasser und Kieselsäure in einer Mischvorrichtung vermischt und homogenisiert, die so enthaltene Mischung zu Strängen verpreßt und trocknet.

Als Kieselsäure kann man gefällte Kieselsäure und/oder auf pyrogenem Wege hergestellte Kieselsäure mit BET-Oberflächen von 30 bis 800 bzw. 50 bis 600 $m^2/g$ einsetzen.

Der Kieselsäuregehalt kann 0,1 bis 20 Gew.-%, vorzugsweise 0,1 bis 10 Gew.-% (bezogen auf die Mischung Kieselsäure und Pulverkohle) betragen.

Als Mischvorrichtung kann man einen bekannten Kneter bzw. eine bekannte Kugelmühle verwenden. Das Homogenisieren der Mischung kann bevorzugt in der Mischvorrichtung durchgeführt werden.

Die Mischungsreihenfolge von pulverförmiger Aktivkohle, Kieselsäure und Wasser ist beliebig. Es können zuerst Aktivkohle und Kieselsäure vorgemischt und dann das Wasser zugegeben werden. Es kann aber auch erst die Kieselsäure in Wasser dispergiert und dann Aktivkohle zugegeben werden oder es kann die Aktivkohle mit Wasser vermischt und dann die Kieselsäure zugegeben werden.

Die erfindungsgemäßen Aktivkohlegranulate zeigen gegenüber den pulverförmigen Ausgangsaktivkohlen keine verringerte Adsorptionsfähigkeit und können in der pharmazeutischen Industrie und in der Getränkeindustrie eingesetzt werden. Sie zeichnen sich durch eine überraschend hohe Staubfreiheit aus.

Die erhaltenen Granulate weisen - obwohl sie keine Granulationshilfmittel enthalten - eine hohe Abriebfestigkeit auf.

Bei der Herstellung ergibt sich der Vorteil, daß als Ausgangsstoff eine pulverförmige Aktivkohle mit bis zu 40 Gew.-% aus dem Aktivierungsprozeß bzw. der Wäsche stammender Restfeuchte eingesetzt werden kann.

Beispiele:

Zur Herstellung der Granulate werden die pulverförmigen Aktivkohlen A, B und C und die Kieselsäuren Ultrasil® VN3, Aerosil® A 150 und Aerosil® A 380 eingesetzt.

Die Pulverkohlen sind wie folgt gekennzeichnet:

Aktivkohle A Wassergehalt     ca. 3 Gew.-%
Jodzahl     850 mg/g
Melasse-mg-zahl     670 mg
Mahlfeinheit     82 Gew.-% <40 μ (DIN 4188)
Aschegehalt     9,0 Gew.-%

Aktivkohle B Wassergehalt     ca. 1 Gew.-%
Jodzahl     895 mg/g
Melasse-mg-zahl     255 mg
Mahlfeinheit     92 Gew.-% <40 μ (DIN 4188)
Aschegehalt     17,9 Gew.-%

Aktivkohle C Wassergehalt     ca. 1 Gew.-%
Jodzahl     1140 mg/g
Melasse-mg-zahl     160 mg
Mahlfeinheit     90 Gew.-% <40 μ (DIN 4188)
Aschegehalt     1,5 Gew.-%

Die Fällungskieselsäure Ultrasil® VN3 ist wie folgt gekennzeichnet:
spez. Oberfläche (BET)     ca. 170 m²/g
Stampfdichte (DIN 53194)     ca. 200 g/l
Gleitverlust (DIN 55921)     ca. 5 Gew.-%
Trocknungsverlust (DIN 55921)     ca. 6 Gew.-%
pH-Wert (DIN 53200)     ca. 6,3
Die auf pyrogenem Wege durch Flammenhydrolyse hergestellte Kieselsäure Aerosil® A 150 und A 380 sind wie folgt gekennzeichnet:

| | | |
|---|---|---|
| spez. Oberfläche (BET) | $150 \pm 15$ m²/g | $380 \pm 30$ m²/g |
| Stampfdichte (DIN 53194) | ca. 50 g/l | 50 g/l |
| Trocknungsverlust (DIN 55921) | <0,5 Gew.-% | <1,5 Gew.-% |
| pH-Wert (DIN 53200) | 3,6 - 4,3 | 3,6 - 4,3 |

Variante A: Granulation in der Strangpresse

Die pulverförmig Aktivkohle und die Kieselsäure werden im Kneter homogenisiert und mit Wasser versetzt. Das Gemisch wird dann in der Strangpresse zu Strängen mit einem Durchmesser von 4 mm verpreßt.

Variante B: Granulation im Doppelschneckenextruder

Die pulverförmige Aktivkohle und die Kieselsäure werden in der Kugelmühle homogenisiert. Das trockene Gemisch wird dann im Extruder mit Wasser versetzt, geknetet und zu Strängen mit einem Durchmesser von 4 mm extrudiert.

Das frisch gepreßte Gut ist noch sehr weich. Erst durch die Trocknung bei 110 bis 120 °C erhalten die Granulate ihre Festigkeit, wobei die Temperatur keinen Einfluß auf die Festigkeit der Granulate hat, sondern lediglich die Trocknungszeit beeinflußt.

Methode zur Bestimmung der Abriebfestigkeit

Zur Bestimmung der Abriebfestigkeit der Granulate wird das Gerät benutzt, mit dem auch die Rollabriebhärte von Korn-und Formkohlen ermittelt wird (siehe Dr. von Kienle und Dr. Bäder, Aktivkohle und ihre Anwendung, Seite 58, Ferdinand Enke Verlag, Stuttgart 1980). Der Test wird allerdings ohne eingelegten Eisenstab durchgeführt. Die Rollabriebhärte stellt den nicht abgeriebenen Prozentsatz der Einwaage dar.

Pulverkohlegranulate auf Basis von pulverförmiger Aktivkohle A

Auf Basis der Pulverkohle A werden nach der Verfahrensvariante B und unter Zusatz der in der Tabelle 2 angegebenen Mengen an Fällungskieselsäure VN3, pyrogen hergestellten Kieselsäuren A 150 und A 380 und Wasser Granulate hergestellt.

Tabelle 1:

| Beispiele Nr. | Kieselsäure (Gew.-%) | Feststoff/ Wasser- Verhältnis | Variante | Abrieb- härte (Gew.-%) |
|---|---|---|---|---|
| 1 | 1 % VN 3 | 1.3 | B | 78.4 |
| 2 | 2 % VN 3 | 1.3 | B | 80.4 |
| 3 | 5 % VN 3 | 1.3 | B | 91.2 |
| 4 | 10 % VN 3 | 1.3 | B | 94.2 |
| 5 | 5 % A 150 | 1.7 | B | 92.0 |
| 6 | 5 % A 380 | 1.5 | B | 91.4 |

Mit steigender Fällungskieselsäure VN 3-Zugabemenge wird die Abriebhärte der Granulate erhöht.

Pulverkohlegranulate auf Basis von pulverförmiger Aktivkohle B

Nach den Verfahrensvarianten A und B und unter Zusatz der in der Tabelle 2 angegebenen Menge an Fällungskieselsäure VN3, pyrogen hergestellter Kieselsäure A 150 und Wasser werden auf Basis von pulverförmiger Aktivkohle Granulate hergestellt.

Tabelle 2:

| Beispiele Nr. | Kieselsäure (Gew.-%) | Feststoff/ Wasser- Verhältnis | Variante | Abrieb- härte (Gew.-%) |
|---|---|---|---|---|
| 7 | 1.0 % A 150 | 1.0 | A | 96.0 |
| 8 | 5.0 % A 150 | 1.0 | A | 97.2 |
| 9 | 1.0 % VN3 | 1.0 | A | 96.0 |
| 10 | 1.0 % VN3 | 1.1 | B | 92.6 |

Pulverkohlegranulate auf Basis von pulverförmiger Aktivkohle C

Nach der Verfahrensvariante A und unter Zusatz der in der Tabelle 3 angegebenen Menge an Fällungskieselsäure VN3 und Wasser werden auf Basis von pulverförmiger Aktivkohle C Granulate herge-stellt.

Tabelle 3:

| Beispiele Nr. | Kieselsäure (Gew.-%) | Feststoff/ Wasser- Verhältnis | Variante | Abrieb- härte (Gew.-%) |
|---|---|---|---|---|
| 11 | 1.0 % VN 3 | 0.75 | A | 88.8 |
| 12 | 5.0 % VN 3 | 0.67 | A | 94.0 |

13: Die pulverförmige Aktivkohle A wird im Kneter mit Wasser gemischt. Danach wird die Fällungskieselsäure VN3 (5 Gew.-%) zugegeben und nochmals gemischt. Das Gemisch wurde mit dem Doppelschneckenextruder zu Strängen mit einem Durchmesser von 4 mm extrudiert.
Feststoff/Wasser-Verhältnis = 1.4
Abriebhärte: 89.4 Gew.-%

14: Die Fällungskieselsäure VN3 (5 Gew.-% bezogen auf die Aktivkohle) wird in Wasser dispergiert und mit der pulverförmigen Aktivkohle A im Kneter vermischt und homogenisiert. Das Gemisch wird mit dem Doppelschneckenextruder zu Strängen mit einem Durchmesser von 4 mm extrudiert.

Feststoff/Wasser-Verhältnis = 1.5

Abriebhärte: 90.6 Gew.-%

Eigenschaften der Pulverkohlegranulate

Alle hergestellten Pulverkohlegranulate - unabhängig vom verwendeten Aktivkohletyp, vom Granulierhifsmittel und der Zugabemenge - zerfallen spontan unter Aufschäumen in Wasser und auch in anderen polaren Lösungsmitteln. Für die Adsorptionsmessungen werden die Granulate direkt eingesetzt, ohne daß vor oder während der Bestimmung eine mechanische Zerkleinerung vorgenommen wurde.

## Tabelle 4: Adsorptionsdaten der Pulvergranulate

| Beispiele Nr. | Benzolaufnahme (200°C,trockene Luft) 0.9    0.1    0.01 | | | Jod-zahl mg/g | Melas-sezahl mg | Granulier-hilfsmittel Gew.-% |
|---|---|---|---|---|---|---|
| Pulverkohle A | - | - | - | 850 | 670 | - |
| 5 | 33.3 | 21.9 | 17.9 | 795 | 615 | 5 % A 150 |
| Pulverkohle B | - | - | - | 895 | 255 | - |
| 7 | 47.3 | 28.6 | 19.3 | 880 | 225 | 1 % A 150 |
| 10 | 46.2 | 27.7 | 18.9 | 870 | 230 | 1 % VN 3 |
| Pulverkohle C | - | - | - | 1140 | 160 | - |
| 18 | 65.2 | 38.4 | 25.6 | 1130 | 160 | 1 % VN 3 |

Im Vergleich mit den entsprechenden Pulverkohlen zeigen die Granulate trotz Granulation und Kieselsäurezusatz nahezu keine Veränderungen in der Melasse-mg-zahl und in der Jodadsorption. An den Granulaten läßt sich auch im Gegensatz zu den pulverförmigen A-Kohlen sehr leicht die Benzoldampfadsorption aus der Gasphase bestimmen.

## Ansprüche

1. Aktivkohlegranulate, enthaltend pulverförmige Aktivkohle, Kieselsäure und gegebenenfalls Wasser.

2. Verfahren zur Herstellung der Aktivkohlegranulate gemäß Anspruch 1, dadurch gekennzeichnet, daß man pulverförmige Aktivkohle, Wasser und Kieselsäure in einer Mischvorrichtung vermischt und homogenisiert, die so erhaltene Mischung zu Strängen verpreßt und trocknet.